(19) Europäisches Patentamt
European Patent Office
Office européen des brevets

(11) Publication number: 0 359 099 A2

(12) # EUROPEAN PATENT APPLICATION

(21) Application number: 89116390.9

(22) Date of filing: 05.09.89

(51) Int. Cl.5: B29C 67/22 , B29C 35/04 , B29C 67/12 , //B29K79:00

(30) Priority: 06.09.88 US 240802
11.10.88 US 255447
24.10.88 US 261114
24.10.88 US 261125
24.10.88 US 261126
24.10.88 US 261124

(43) Date of publication of application: 21.03.90 Bulletin 90/12

(84) Designated Contracting States: DE FR GB IT

(71) Applicant: Imi-Tech Corporation
701 Fargo Avenue
Elk Grove Village Illinois 60007(US)

(72) Inventor: Ferro, Gregory Armand
2120 Hassell Road Apt. 109
Hoffman Estates Illinois 70817(US)

(74) Representative: Dipl.-Ing. Schwabe, Dr. Dr. Sandmair, Dr. Marx
Stuntzstrasse 16
D-8000 München 80(DE)

(54) **Recurable and cured cellular materials.**

(57) Cured polyimide foam is exposed to an atmosphere of steam at elevated temperature and pressure for a period of time sufficient to convert the foam into a non-flexible, non-resilient recurable cellular material having many uses. Preferably the process is conducted such that the cellular material is recurable to a flexible resilient foam having tensile strength properties similar to the tensile strength properties of the original cured polyimide foam subjected to the process. Before recuring, the non-flexible, non-resilient recurable cellular material may be shaped or contoured, and then recured. For example, by impressing shaped articles into the recurable material followed by recuring, shipping/storage containers for the articles are readily produced.

EP 0 359 099 A2

# RECURABLE AND CURED CELLULAR MATERIALS

This invention relates to the conversion of cured polyimide foams into recurable cellular materials, to the curing of such structures and to uses therefor.

As is well known, polyimide foams are usually produced by forming a polyimide precursor and converting the precursors to a foamed polyimide structure. Usually the precursor is in essence a mixture of a tetracarboxylic acid or suitable derivative thereof and one or more primary diamines with or without a foaming agent. On heating this mixture these components interact with each other and volatile components are released within the precursor so that a foamed intermediate structure (usually composed of a polyamic acid/ester) is formed which on further heating is transformed into a cured polyimide foam.

A method for converting polyimide foams into non-flexible, non-resilient recurable cellular materials has now been discovered. This discovery has made it possible to develop a wide variety of new foamed polyimide structures and applications for such structures as well as methods for the production of such structures. An embodiment of this invention is a non-flexible, non-resilient foam produced by this method.

In accordance with still another embodiment of this invention, there is provided a process which comprises exposing cured polyimide foam to an atmosphere of steam at elevated temperature and pressure for a period of time sufficient to convert said foam into a non-flexible, non-resilient recurable cellular material, and subsequently recuring said cellular material. In one preferred embodiment this process is conducted such that said cellular material is recurable to a flexible resilient foam having physical properties similar to the physical properties of the original cured polyimide foam subjected to the process. Looking at the matter in a different way, a preferred embodiment of this invention involves conducting the foregoing process in such a way that the glass transition temperature of the original cured polyimide as determined by differential scanning calorimetry is reduced to a glass transition temperature falling within a predetermined range of glass transition temperatures for said original cured polyimide, and is thereupon discontinued.

Pursuant to yet another embodiment, this invention provides a process comprising (i) exposing cured polyimide foam to an atmosphere of steam at elevated temperature and pressure for a period of time sufficient to convert said foam into a non-flexible, non-resilient recurable cellular material, (ii) shaping or contouring said cellular material, and (iii) curing the shaped or contoured cellular material into a shaped or contoured cured polyimide foam. Still another embodiment is a shaped or contoured cured polyimide foam produced by this process. Particularly preferred is a process of this character which is conducted such that in (i) said recurable cellular material is recurable to a flexible, resilient foam having physical properties similar to the physical properties of the original cured polyimide foam used in (i), and such that in (iii) said shaped or contoured cellular material is cured into a shaped or contoured cured polyimide foam having physical strength properties similar to the physical properties of the original cured polyimide foam used in (i).

In still another embodiment, this invention provides a fire-resistant, impact-resistant shipping/storage package which comprises at least one article to be shipped/stored, said article being at least partially encased in a cured resilient polyimide foam having a cavity therein shaped and contoured to at least a portion of the shape and contour of said article. Preferably the article is fully encased in at least two sections of the foam each of which has a cavity shaped and contoured to a different portion of the shape and contour of the article.

And a still further embodiment is a fire-resistant, impact-resistant shipping/storage container which comprises a cured resilient polyimide foam having a cavity therein shaped and contoured to at least a portion of the shape and contour of an article to be shipped/stored in said container. Preferably the container comprising at least two sections of the foam each of which has a cavity therein shaped and countoured to a different portion of the shape and contour of the article.

Other objects and embodiments will appear hereinafter.

A feature of this invention is that a polyimide foam which possesses a combination of desirable physical properties, is converted by a hydrolytic process under controlled elevated temperature and pressure conditions into a foamed polymeric material which is devoid of these properties. Nevertheless, the resultant foamed polymeric material by virtue of its malleability and pliability, can easily be shaped or contoured or changed into another desired shape or configuration and, surprisingly, transformed while in this shape or configuration into a corresponding shaped or configured cured polyimide foam. Moreover, by suitable control of the hydrolytic conditions employed, the final shaped or contoured polyimide foam can have properties such as tensile strength which are similar to the corresponding physical properties possessed by the original polyimide foam. Moreover, if conducted under the appropriate controlled conditions of time,

temperature and pressure, the steaming or hydrolytic treatment utilized pursuant to this invention, can be repeated over and over again on the same polyimide foamed artifact.

The conditions used in converting the initial foamed polyimide into the non-flexible, non-resilient foamed material will vary depending upon the makeup of the initial polyimide foam. In general, however, the initial polyimide foam is usually placed in a sealed reaction vessel such as an autoclave and treated with steam at a suitable combination of temperature and pressure conditions to transform the original foam into a foamed material which can readily be penetrated by a foreign object. While in this condition the foam can be shaped or impressed into a desired configuration which is then "set" by subjecting the shaped or impressed foamed mass to thermal curing to reconvert the material into a polyimide foam. In conducting the transformation from polyimide foam to the shapeable or contourable foam, it is desirable--though not essential for some applications--to conduct the pressure and steaming under conditions which do not pass the point of no return. That is to say, if the pressurized steam hydrolysis is carried out under excessively severe conditions (e.g., using an excessive set of time temperature-pressure conditions or using an excessive period of time) the resultant foamed structure may not be recurable into a polyimide foam. So long as it is recurable into a polyimide foam, it falls within the ambit of this invention. But in accordance with the preferred embodiments of this invention, the conditions used in the steam hydrolysis are such that the resultant foamed structure can be transformed, by thermal curing, into foamed polyimide having tensile strength properties comparable to those of the original polyimide foam.

In many cases a convenient way of gauging the extent of the pressurized steam hydrolysis of the initial polyimide foam is to monitor the progress of this reaction by means of differential scanning calorimetry. For example, as the pressured steaming operation is being conducted, samples of the foam may be examined by means of a differential scanning calorimeter such as a Mettler TA-3000 System with a TC 10A Processor.

In general, the non-resilient, non-flexible foam formed in the steam treatment will, at least when using foams of the type described in the Examples hereinafter, have a consistency somewhat like lightly packed snow.

In conducting the pressurized steam hydrolysis, it is convenient to subject the initial polyimide foam to the action of steam in a closed system such as an autoclave. The time-temperature-pressure conditions may vary from one type of foamed polyimide polymer to another. With polyimide foams of the type described in the Examples hereinafter, temperatures in the range of about 260 to about 274 °C (pressures in the range of about 680 to about 849 psia) will be employed. The time periods used will of course depend on the temperature and pressure used, and the properties desired in the resultant non-flexible, non-resilient foamed material to be produced therefrom. Thus for a given cured polyimide foam, the higher the temperature and pressure, the shorter may be the steam treatment time. And, if it is desired to produce a non-flexible, non-resilient foamed material that can be cured to a polyimide foam having tensile strength properties comparable to those of the initial foam, the time of exposure to a given set of steam temperature-pressure conditions will be shorter than if it is desired to form a recurable non-flexible, non-resilient foamed material that can be recured to a polyimide foam which does not have tensile strength properties generally as good as those of the initial cured polyimide foam.

If desired, the steam to which the initial cured polyimide foam is exposed may be diluted with other gaseous or vaporous materials, such as air, nitrogen, argon, neon, methanol, or the like.

It is to be noted that the recured polyimide foams produced by the process of this invention can repeatedly be subjected to the steam treatment and recuring steps, over and over again.

Having described the basic concepts of the invention, reference is now made to the following examples which are provided by way of illustration, but not by way of limitation of the practice of the invention.

## Example I

The samples used in these runs were based on cured polyimide foams made from a lower alkyl ester of benzophenone tetracarboxylic acid (predominantly dimethyl ester), 4,4,-methylenedianiline and 2,6-diaminopyridine in a mol ratio of about 1.0:0.7:0.3, respectively. Six such samples were placed in a sealed autoclave and subjected to steam at 270 °F (about 132 °C) for 4 hours. After each hour, the glass transition temperature (Tg) of the foam was determined by differential scanning calorimetry with a Mettler TA-3000 System with a TC 10A Processor, using the 50% Tg values reported by the system. After the third hour, and again at the end of the fourth hour, separate portions of these six foams were removed from the autoclave and recured in a thermal oven at 525 °F (about 274 °C) for 45 minutes. The tensile properties of

the resultant cured foams were then determined by ASTM test procedure D-3574 using an Instrom model 1122 universal tester with a 50-pound load cell.

Table 1 shows the Tg values for the initial polyimide foam samples, the Tg values of these materials after 1, 2, 3, and 4 hours of exposure to the pressurized steam, and the Tg values of the foams that were recured after 3 and 4 hours of steam exposure, respectively. The results of the tensile strength measurements are shown in Table 2.

Table 1

| | Glass Transition Temperatures, °C | | | | |
|---|---|---|---|---|---|
| Sample | Before Autoclave | Autoclave 1 Hour | Autoclave 2 Hours | Autoclave 3 Hours | Autoclave 4 Hours |
| 1 | 268.9 | 264.0 | 260.9 | 258.8 | 260.1 |
| 2 | 273.4 | 267.5 | 262.8 | 262.4 | 256.2 |
| 3 | 273.0 | 265.2 | 261.7 | 260.6 | 260.1 |
| 4 | 270.3 | 268.4 | 268.1 | 262.2 | 260.0 |
| 5 | 269.3 | 265.4 | 265.3 | 265.0 | 253.7 |
| 6 | 272.8 | 266.6 | 263.4 | 262.9 | 255.3 |
| | | | | Recured | Recured |
| 1 | | | | 286.7 | 286.3 |
| 2 | | | | 286.1 | 283.6 |
| 3 | | | | 286.5 | 285.5 |
| 4 | | | | 286.3 | 285.6 |
| 5 | | | | 284.9 | 287.4 |
| 6 | | | | 286.7 | 284.9 |

Table 2

| | Tensile Strength, (psi) | |
|---|---|---|
| Sample | Recured After 3 Hours Autoclave | Recured After 4 Hours Autoclave |
| 1 | 11.7 | 8.4 |
| 2 | 11.7 | 11.5 |
| 3 | 12.3 | 10.4 |
| 4 | 12.1 | <1.0 |
| 5 | 12.6 | 7.7 |
| 6 | 11.5 | <1.0 |

The data in Table 2 indicate that under the conditions used, all six recured samples that had been steam treated for 3 hours exhibited tensile strength properties similar to the tensile strength properties of the original cured polyimide foams. On the other hand, although all of the six samples that had been steamed treated for 4 hours were recurable, only recured Samples 2 and 3 retained tensile properties similar to the initial foams from which they were formed. Recured Samples 1 and 5 had lower tensile strengths and the tensile strengths of Samples 4 and 6 were very low.

## Example II

A series of runs were conducted generally as in Example I except that the samples were exposed to

pressurized steam in the autoclave for a total of 6 hours, and tensile strength measurements were made on all samples. The initial cured polyimide foam had a Tg of 275.36 °C and a tensile strength of 9.08 + 0.40 psi. When this foam was subjected to the recuring conditions (without having been exposed to steam) it had a Tg of 280.43 °C and a tensile strength of 8.91 + 1.07 psi. The results of the runs involving use of the steam treatment are summarized in Table 3.

Table 3

| | Glass Transition Temperatures, °C | | | Tensile Strength, psi | |
|---|---|---|---|---|---|
| Sample | Initial | After Autoclave | After Recuring | After Autoclave | After Recuring |
| 1 Hr. | 275.19 | 271.95 | 284.80 | 9.84 + 1.66 | 10.16 + 1.55 |
| 2 Hrs. | 276.33 | 268.24 | 280.74 | 7.26 + 1.35 | 8.88 + 0.64 |
| 3 Hrs. | 274.92 | 265.20 | 277.81 | 6.13 + 1.02 | 7.23 + 0.61 |
| 4 Hrs. | 274.15 | 261.86 | 280.36 | <1.0 | 9.15 + 0.55 |
| 5 Hrs. | 279.40 | 263.27 | 281.29 | <1.0 | 11.09 + 0.80 |
| 6 Hrs. | 276.04 | 273.66 | 286.46 | <1.0 | <1.0 |

## Example III

Using the general procedure of Example II, six samples (12" x 6" x 0.5" in size) of the cured polyimide foam were subjected to pressurized steam in the autoclave. After specified times of steam-treatment, the samples together with a control sample (not steam treated) were subjected to recuring conditions, and Tg and tensile strength measures were made on all samples. Tables 4 and 5 summarize the results so obtained.

Table 4

| | Glass Transition Temperatures, °C | | | | | | |
|---|---|---|---|---|---|---|---|
| | Before Autoclave | After Autoclave | | | | | |
| | | 1 Hr. | 2 Hrs. | 3 Hrs. | 4 Hrs. | 5 Hrs. | 6 Hrs. |
| Control | 275.4 | | | | | | |
| 1 | 275.2 | 271.9 | | | | | |
| 2 | 276.3 | | 268.2 | | | | |
| 3 | 274.9 | | | 265.2 | | | |
| 4 | 274.2 | | | | 261.9 | | |
| 5 | 279.4 | | | | | 263.3 | |
| 6 | 276.0 | | | | | | 273.7 |
| | | After Thermal Recure | | | | | |
| | | 1 Hr. | 2 Hrs. | 3 Hrs. | 4 Hrs. | 5 Hrs. | 6 Hrs. |
| Control | 280.4 | | | | | | |
| 1 | | 284.8 | | | | | |
| 2 | | | 280.7 | | | | |
| 3 | | | | 277.8 | | | |
| 4 | | | | | 280.4 | | |
| 5 | | | | | | 281.3 | |
| 6 | | | | | | | 286.5 |

Table 5

| | Tensile Strength, (psi) | | | | | | |
|---|---|---|---|---|---|---|---|
| | Before Autoclave | After Autoclave | | | | | |
| Sample | | 1 Hr. | 2 Hrs. | 3 Hrs. | 4 Hrs. | 5 Hrs. | 6 Hrs. |
| Control | 9.1 | | | | | | |
| 1 | | 9.8 | | | | | |
| 2 | | | 7.3 | | | | |
| 3 | | | | 6.2 | | | |
| 4 | | | | | <1.0 | | |
| 5 | | | | | | <1.0 | |
| 6 | | | | | | | <1.0 |
| | | After Thermal Recuring | | | | | |
| | | 1 Hr. | 2 Hrs. | 3 Hrs. | 4 Hrs. | 5 Hrs. | 6 Hrs. |
| Control | 9.0 | | | | | | |
| 1 | | 10.2 | | | | | |
| 2 | | | 8.9 | | | | |
| 3 | | | | 7.2 | | | |
| 4 | | | | | 9.2 | | |
| 5 | | | | | | 11.1 | |
| 6 | | | | | | | <1.0 |

It can be seen from the data in Table 5 that with the particular initial cured polyimide sample used and the

particular conditions employed in the steam treatment, the recured material formed after 6 hours of steam treatment did not regain tensile strength similar to its original tensile strength. On the other hand, the samples steam treated for shorter periods of time did regain good tensile properties.

It can be seen from the data in Table 5 that with the particular initial cured polyimide sample used and the particular conditions employed in the steam treatment, the recured material formed after six hours of steam treatment did not regain tensile strength similar to its original tensile strength. On the other hand, the samples steam treated for shorter periods of time did regain good tensile properties.

## Example IV

Rectangular blocks of cured polyimide foam were subjected to pressurized steam as in the above Examples for 3 to 4 hours and cooled. Various objects, namely a valve made from Teflon fluoropolymer, a glass stirrer bearing, a glass stopcock, and an electronic board for a personal computer, were then impressed into the resultant non-flexible, non-resilient recurable cellular blocks. After removing the objects, the blocks were then recured at 275°C for 45 minutes in a thermal oven. In each case, the resultant recured polyimide foam was found to be contoured to the shape of the object which had been impressed therein and was suitable for use as a shipping/storage container therefor.

Usually, as in Example IV, the objects used in the shaping or contouring will be removed from the recurable foam before conducting the curing operation. However, objects made of temperature-resistant materials may be left in place during the curing.

A variety of other useful products can be produced from the non-flexible, non-resilient recurable cellular materials producible by the steam-treatment process of this invention. For example, composite articles, laminates, foam-filled honeycomb, sound and/or heat insulation tiles and boards and the like can be formed therefrom.

Accordingly this invention, in one of its basic forms, provides a process for preparing laminate layers, coatings, and other products which comprises compressing and heat curing a non-resilient, non-flexible recurable material formed by subjecting cured polyimide foam to the action of pressurized steam. In the practice of a number of the embodiments of this invention the recurable material is preferably in subdivided or particulate form before it is compressed. In other embodiments the recurable material is in the form of a sheet or other shape appropriate for the use at hand.

To produce the recurable material in subdivided form the initial cured polyimide foam may be subdivided to the desired size (e.g., by shredding or chopping) and subjected to the action of pressurized steam, or alternatively, the cured polyimide foam may first be subjected to the action of the pressurized steam followed by subdividing the resultant recurable material to the desired size. Naturally, combinations of such procedures may also be employed, as, for example, subdividing the cured polyimide foam to an intermediate size, subjecting this to the action of pressurized steam, and thereafter further subdividing the resultant recurable material.

When the recurable material is in micro form (i.e., in the form of a very fine powder) it may no longer possess the cellularity, or at least the amount of cellularity, of the material from which it was produced. On the other hand, when the recurable material is macro form (i.e., in the form of sheets, blocks, discs, spheres, irregular chunks, and other non-finely divided pieces) it will usually possess cellularity and thus be a recurable cellular material.

When using the recurable material in subdivided or particulate form, it is desirable in the practice of certain embodiments of this invention to use the subdivided or particulate cellular material in admixture with a subdivided or particulate filler before subjecting the material to compression.

The process may be conducted such that the compressing and heat curing are conducted sequentially. Alternatively, the compressing and heat curing may be conducted concurrently. In the sequential mode of operation some heat may be applied even before the material is compressed, but the amount of thermal energy so applied is insufficient to cause the material to cure to any substantial extent.

The amount of pressure used in compressing the recurable material will largely be dependent upon the type of article being produced and the properties (e.g., density) desired therefor. Thus high pressures such as attainable by use of a mechanical or hydraulic presses can yield films or sheets or other shapes having little or no residual cellular configuration. On the other hand, when it is desired to provide boards, panels or other shapes which have residual cellularity, lesser pressures will be employed.

Temperatures used in the heat curing will vary somewhat depending upon the makeup of the raw materials being processed, the amount and character of the filler or reinforcement used, if any, and the like.

Generally speaking temperatures above about 200 °C (usually above about 250 °C) are normally adequate.

This invention is not intended to be, nor should it be, limited to any specific set of time-temperature-pressure conditions for the compression and heat curing operations of this invention, as these may be varied to suit the needs of the occasion and can be readily ascertained in any given case by performing a few pilot experiments with the particular material(s) being processed. All that is required is that the results achievable by the practice of this invention be accomplished by use of appropriate materials and process conditions.

In order to appreciate some of the embodiments of this invention, a listing of some of these embodiments is presented below. In this listing the term "steam foam" is used as an abbreviated way of referring to the hydrolytic steaming process which converts cured polyimide foam into the non-resilient, non-flexible recurable material. Also in the interest of brevity such non-resilient, non-flexible recurable material is referred to simply as "material". When the context indicates that the material contains or has had filler mixed therein, or that it has been subdivided, or otherwise treated, the term "material" should be understood as referring to the material in that particular condition. Again for the sake of brevity the terms "filler" and "filled" are used, but it is to be understood that the fillers may be or include reinforcing materials, such as continuous, interwoven or chopped fibers or rovings, particulate or powdery material, platelets, or hollow spherical articles or microballoons. The term "subdivide" encompasses such operations as crushing, shredding, chopping, grinding, and abrading, and thus "subdivided" refers to materials in forms resulting from the use of such procedures. The terms "coat" and "laminate" are used in their normal sense to refer to applying a coating of material (which may be subdivided or in any other suitable form), or a laminate of material (usually in sheet or film form) to another object or substrate. The term "interpose" denotes applying the material to one or more articles or substrates so that in the article to be compressed and cured the material is between or among the articles. Thus the material may first be applied to (e.g., coated onto a surface of), say, one article and another article placed thereon so that the material is (in this case) between two articles and thus may serve as an adhesive layer therefor. Alternatively, this same end product may be achieved for example by holding the two articles in close proximity to each other and sliding or otherwise introducing the material between these two articles, or by coating the surfaces of the two articles with the material and then bringing the two coated faces together. The terms "coat", "laminate", and "interpose" thus overlap each other to some extent, and are intended to include forming impregnated articles (prepregs and the like), forming coated articles, forming laminated articles, forming sandwich structures, forming articles in which two or more parts are bonded or adhered together, and forming reinforced articles.

The listing is as follows:

General embodiments, e.g., applicable for making films, sheets, boards, shapes, laminates, composites, coated articles, sandwich structures; and for bonding materials or articles together as in the case of adhesive applications

1) Compress & heat cure material
2) Compress & heat cure subdivided material
3) Compress & heat cure material in sheet form
4) Compress & heat cure filled material
5) Compress & heat cure subdivided filled material
6) Compress & heat cure filled material in sheet form
7) Subdivide, compress & heat cure material
8) Subdivide, compress & heat cure filled material
9) Subdivide, mix filler with, compress & heat cure material
10) Subdivide, mix more filler with, compress & heat cure filled material
11) Mix filler with subdivided material, compress & heat cure
12) Mix more filler with subdivided filled material, compress & heat cure
13) Conduct 1-12 respectively, with compressing and heat curing of the material done concurrently
14) Conduct 1-12 respectively, with compressing and heat curing of the material done sequentially
15) Steam foam; compress & heat cure the material
16) Steam subdivided foam; compress & heat cure the material
17) Steam foam in sheet form; compress & heat cure the material
18) Steam filled foam; compress & heat cure the material
19) Steam subdivided filled foam; compress & heat cure the material

20) Steam filled foam in sheet form; compress & heat cure the material
21) Steam foam; subdivide, compress & heat cure the material
22) Steam filled foam; subdivide, compress & heat cure the material
23) Steam foam; subdivide, mix filler with, compress & heat cure the material
24) Steam filled foam; subdivide, mix more filler with, compress & heat cure the material
25) Subdivide & steam foam; compress & heat cure the material
26) Subdivide & steam filled foam; compress & heat cure the material
27) Subdivide & steam foam; mix filler with, compress & heat cure the material
28) Subdivide & steam filled foam; mix more filler with, compress & heat cure the material
29) Subdivide, mix filler with, & steam foam; compress & heat cure the material
30) Subdivide filled foam, mix more filler with, & steam the foam; compress & heat cure the material
31) Conduct 15-30 respectively, with compressing and heat curing of the material done concurrently
32) Conduct 15-30 respectively, with compressing and heat curing of the material done sequentially

Embodiments relating more particularly to formation of coated or laminated articles, sandwich structures, composites, and the like

33) Compress & heat cure a coating or lamination of material on a substrate
34) Compress & heat cure a coating or lamination of subdivided material on a substrate
35) Compress & heat cure a coating or lamination of material in sheet formon a substrate
36) Compress & heat cure a coating or lamination of filled material on a substrate
37) Compress & heat cure a coating or lamination of subdivided filled material on a substrate
38) Compress & heat cure a coating or lamination of filled material in sheet form on a substrate
39) Coat or laminate a substrate with material, & compress & heat cure the material thereon
40) Coat or laminate a substrate with subdivided material, & compress & heat cure the material thereon
41) Coat or laminate a substrate with material in sheet form, & compress & heat cure the material thereon
42) Coat or laminate a substrate with filled material, & compress & heat cure the material thereon
43) Coat or laminate a substrate with subdivided filled material, & compress & heat cure the material thereon
44) Coat or laminate a substrate with filled material in sheet form, & compress & heat cure the material thereon
45) Subdivide material, coat or laminate a substrate therewith, & compress & heat cure the material thereon
46) Subdivide filled material, coat or laminate a substrate therewith, & compress & heat cure the material thereon
47) Subdivide material, mix filler therewith, coat or laminate a substrate therewith, & compress & heat cure the material thereon
48) Subdivide filled material, mix more filler therewith, coat or laminate a substrate therewith, & compress & heat cure the material thereon
49) Mix filler with subdivided material, coat or laminate a substrate therewith, & compress & heat cure the material thereon
50) Mix more filler with subdivided filled material, coat or laminate a substrate therewith, & compress & heat cure the material thereon
51) Conduct 33-50 respectively, with compressing and heat curing of the material done concurrently
52) Conduct 33-50 respectively, with compressing and heat curing of the material done sequentially
53) Steam foam; coat or laminate a substrate with the material, & compress & heat cure the material thereon
54) Steam subdivided foam; coat or laminate a substrate with the material, & compress & heat cure the material thereon
55) Steam foam in sheet form; coat or laminate a substrate with the material, & compress & heat cure the material thereon
56) Steam filled foam; coat or laminate a substrate with the material, & compress & heat cure the material thereon
57 Steam subdivided filled foam; coat or laminate a substrate with the material, & compress & heat cure the material thereon
58) Steam filled foam in sheet form; coat or laminate a substrate with the material, & compress &

heat cure the material thereon

59) Steam foam; subdivide the material, coat or laminate a substrate therewith, & compress & heat cure the material thereon

60) Steam filled foam; subdivide the material, coat or laminate a substrate therewith, & compress & heat cure the material thereon

61) Steam foam; subdivide & mix filler with the material, coat or laminate a substrate therewith, & compress & heat cure the material thereon

62) Steam filled foam; subdivide & mix more filler with the material, coat or laminate a substrate therewith, & compress & heat cure the material thereon

63) Subdivide & steam foam; coat or laminate a substrate with the material, & compress & heat cure the material thereon

64) Subdivide & steam filled foam; coat or laminate a substrate with the material, & compress & heat cure the material thereon

65) Subdivide & steam foam; mix filler with the material, coat or laminate a substrate therewith, & compress & heat cure the material thereon

66) Subdivide & steam filled foam; mix more filler with the material, coat or laminate a substrate therewith, & compress & heat cure the material thereon

67) Subdivide, mix filler with, & steam foam; coat or laminate a substrate with the material, & compress & heat cure the material thereon

68) Subdivide filled foam, mix more filler with, & steam the foam; coat or laminate a substrate with the material, & compress & heat cure the material thereon

69) Conduct 53-68 respectively, with compressing and heat curing of the material done concurrently

70) Conduct 53-68 respectively, with compressing and heat curing of the material done sequentially

Embodiments relating more particularly to formation of adhesively bonded articles, laminates, sandwich structures, composites, and the like

71) Compress & heat cure material interposed between or among a plurality of articles

72) Compress & heat cure subdivided material interposed between or among a plurality of articles

73) Compress & heat cure material in sheet form interposed between or among a plurality of articles

74) Compress & heat cure filled material interposed between or among a plurality of articles

75) Compress & heat cure subdivided filled material interposed between or among a plurality of articles

76) Compress & heat cure filled material in sheet form interposed between or among a plurality of articles

77) Interpose material between or among a plurality of articles, & compress & heat cure the material therebetween or thereamong

78) Interpose subdivided material between or among a plurality of articles, & compress & heat cure the material therebetween or thereamong

79) Interpose material in sheet form between or among a plurality of articles, & compress & heat cure the material therebetween or thereamong

80) Interpose filled material between or among a plurality of articles, & compress & heat cure the material therebetween or thereamong

81) Interpose subdivided filled material between or among a plurality of articles, & compress & heat cure the material therebetween or thereamong

82) Interpose filled material in sheet form between or among a plurality of articles, & compress & heat cure the material therebetween or thereamong

83) Subdivide material, interpose the material between or among a plurality of articles, & compress & heat cure the material therebetween or thereamong

84) Subdivide filled material, interpose the material between or among a plurality of articles, & compress & heat cure the material therebetween or thereamong

85) Subdivide material, mix filler therewith, interpose the material between or among a plurality of articles, & compress & heat cure the material therebetween or thereamong

86) Subdivide filled material, mix more filler therewith, interpose the material between or among a plurality of articles, & compress & heat cure the material therebetween or thereamong

87) Mix filler with subdivided material, interpose the material between or among a plurality of articles, & compress & heat cure the material therebetween or thereamong

88) Mix more filler with subdivided filled material, interpose the material between or among a plurality

of articles, & compress & heat cure the material therebetween or thereamong

89) Conduct 71-88 respectively, with compressing and heat curing of the material done concurrently

90) Conduct 71-88 respectively, with compressing and heat curing of the material done sequentially

91) Steam foam; interpose the material between or among a plurality of articles, & compress & heat cure the material therebetween or thereamong

92) Steam subdivided foam; interpose the material between or among a plurality of articles, & compress & heat cure the material therebetween or thereamong

93) Steam foam in sheet form; interpose the material between or among a plurality of articles, & compress & heat cure the material therebetween or thereamong

94) Steam filled foam; interpose the material between or among a plurality of articles, & compress & heat cure the material therebetween or thereamong

95) Steam subdivided filled foam; interpose the material between or among a plurality of articles, & compress & heat cure the material therebetween or thereamong

96) Steam filled foam in sheet form; interpose the material between or among a plurality of articles, & compress & heat cure the material therebetween or thereamong

97) Steam foam; subdivide the material, interpose the material between or among a plurality of articles, & compress & heat cure the material therebetween or thereamong

98) Steam filled foam; subdivide the material, interpose the material between or among a plurality of articles, & compress & heat cure the material therebetween or thereamong

99) Steam foam; subdivide & mix filler with the material, interpose the material between or among a plurality of articles, & compress & heat cure the material therebetween or thereamong

100) Steam filled foam; subdivide & mix more filler with the material, interpose the material between or among a plurality of articles, & compress & heat cure the material therebetween or thereamong

101) Subdivide & steam foam; interpose the material between or among a plurality of articles, & compress & heat cure the material therebetween or thereamong

102) Subdivide & steam filled foam; interpose the material between or among a plurality of articles, & compress & heat cure the material therebetween or thereamong

103) Subdivide & steam foam; mix filler with the material, interpose the material between or among a plurality of articles, & compress & heat cure the material therebetween or thereamong

104) Subdivide & steam filled foam; mix more filler with the material, interpose the material between or among a plurality of articles, & compress & heat cure the material therebetween or thereamong

105) Subdivide, mix filler with, & steam foam; interpose the material between or among a plurality of articles, & compress & heat cure the material therebetween or thereamong

106) Subdivide filled foam, mix more filler with, & steam the foam; interpose the material between or among a plurality of articles, & compress & heat cure the material therebetween or thereamong

107) Conduct 91-106 respectively, with compressing and heat curing of the material done concurrently

108) Conduct 91-106 respectively, with compressing and heat curing of the material done sequentially

To produce the recurable material, cured polyimide foam (whether in subdivided form or sheet or slab form) is exposed to pressurized steam under time-temperature-pressure conditions yielding a recurable material that is malleable and readily shaped into various configurations. While in this condition it may be subdivided if desired. The recurable material in cellular form (e.g., as a cellular sheet) is well-suited for use as a bonding layer for producing laminated composites and panels, and/or as an outer sound or vibration absorbing coating for various planar substrates.

A feature of this invention is that the initial cured polyimide foam may be scrap or off-specification material which would otherwise have to be disposed of. The scrap or off-specification material may be used by itself or used in combination with specification grade cured polyimide foam.

Among the fillers and reinforcing materials that may be utilized are metals, minerals, polymers and ceramics in powder or particulate form, or in such forms as turnings, platelets, irregular shapes, short fibers, filaments or strands, continuous or woven fibers or strands or rovings, and the like. Laminating materials and substrates for use with the recurable materials in the practice of this invention include sheets, plies, boards, films, foils, fabrics, prepregs, aligned fibers or strands or rovings, or other shapes of metals, plastics, ceramics, composite materials, particle board, wood, paper, paperboard, rubbers and elastomers, and many other such materials. It will be recognized that multilayered and/or composite structures or panels may be used as substrates or laminates. The possibilities are virtually limitless.

Examples V and VI illustrate the production and properties of a variety of articles of this invention.

## Example V

The recurable material used in forming these articles was produced as follows: Pieces of cured polyimide foam roughly 12 inches x 12 inches x 1/2 inch in size were cut from larger sheets, including kerf, taken from a waste pile of cured polyimide foam. This foam had been produced from a precursor composed predominantly of 3,3′,4,4′-benzophenone tetracarboxylic acid dimethyl ester, 4,4′-methylenedianiline and 2,6-diaminopyridene (mol ratio of 1.0:0.7:0.3, respectivly). Areas of crust were left on some of the pieces. These pieces were exposed to steam at 270° F (about 132° C) for 3.5 hours. The resultant cellular material was easily crushed by hand into a fine, low bulk density powder.

A group of articles was formed from this powder as follows:

a) A mixture composed of 50% by weight of the above recurable powder and 50% by weight of HI-YIELD® vermiculite particles was prepared by rolling these materials in a closed jug. The resultant mixture was pressed by hand into a rectangular pan. The pan was placed in a thermal oven for one hour at 554° F (290° C) for one hour and then an additional one half hour at 600° F (about 316° C). The article formed was a brown, boardy, composite type material with a density of 5.3 lbs/cubic foot. The product had good integrity and was quite rigid, compressing only slightly with finger pressure and snapping after only slight flex. The composite material did not burn when exposed to the flame from a propane torch; instead it charred and cracked.

b) Portions of the above recurable powder were placed on both sides of a perforated aluminum plate (1/8 inch holes) and between two solid metal plates. The outer plates were compressed together by screwing down wing nuts at the corners. This assembly was heated treated as in a) above. The perforated plate with the cured particulate matter on both sides was then removed from between the compression plates. This yielded a coated aluminum plate in which the foam particles appeared to have melted together to form a smooth surface but with discrete particles beneath the surface. This coating could not be readily scratched away from the aluminum substrate.

c) A portion of the above recurable powder was placed between compression plates which were screwed togetehr as tight as possible by means of wing nuts at the corners. The assembly was heat treated as in a). The cured material was removed from between the plates after cooling. The resultant product was a thin, wafer-like material that could be flexed to about 20° C before cracking. The surface was smooth and glossy but the interior was still in the form of a dense foam. The density of the wafer-like material was 12.8 lbs/cubic foot. It did not burn when exposed to a gas flame; instead it merely charred to a limited extent.

d) Another portion of the above recurable particulate material was placed between the platens of a hydraulic press. The press was closed to a pressure of 750 psi with platen temperatures of 550° F (about 288° C). The press was opened after about one minute. The resultant article was a thin, flexible, translucent, amber colored, strong, plastic-like sheet. It softened and buckled when exposed to a gas flame but it did not burn.

## Example VI

Some waste foam of the type used in Example V was shredded and then subjected to pressurized steam in an autoclave as in Example V. The steam treated shreds were pressed together by hand into a pan of rectangular shape constituting a mold therefor. The pan was placed in a thermal oven and heated first for 0.5 hour at 500° F (260° C), then for 0.5 hour at 554° F (290° C), and finally for 0.5 hour at 600° F (about 316° C). This produced a rigid, dark brown cured cellular foam having a density of 6.7 lbs/cubic foot. The product was strong, only slightly compressible, and was flexible. It did not burn when exposed to a gas flame.

The flame and fire resistance of the cured articles of this invention together with their relatively low smoke output when exposed to fire render them ideally suited for use as decorative, construction and/or insultation materials for aircraft and spacecraft, houses and buildings of all types, automobiles and trucks, boats and ships, submarines, furniture and the like. The laminated and coated structures are particularly useful as structural members especially when the laminate(s) and/or substrates are themselves composed of flame resistant or non-combustible materials(s). Such articles can readily be applied to or used as flame resistant panels for wall and ceiling surfaces, and can serve to dampen sound and other types of vibration. Enhancing all such utilities are the relatively high strengths and variety of densities in which the articles of this invention may be provided. The particulate recurable material may be compressed and cured either in

molds or through extrusion dies to produce any of a variety of molded articles, such as knobs, handles, plates, rods, and the like.

In the preparation of some products of the invention, a cured polyimide foam is transformed into a body of non-flexible, non-resilient recurable cellular material, physically converted or shaped into a special configuration and then the cellular material is cured while in such configuration. In particular, this invention provides, inter alia, a process which comprises (i) converting cured polyimide foam into a body of non-flexible, non-resilient recurable cellular material by exposing a body of the foam to the action of steam, (ii) forming in the body of cellular material a plurality of spaced-apart laterally-disposed individual molded portions integral with and extending from a continuous portion of such cellular material, and (iii) heating the resultant unitary or integral body to cause the cellular material to cure.

In another of its embodiments this invention provides a process which comprises (i) exposing a body of cured polyimide foam to an atmosphere of steam at an elevated pressure for a period of time sufficient to convert said foam into a body of non-flexible, non-resilient recurable cellular material, (ii) impressing into the body of cellular material to a distance less than the full distance of the body of cellular material a molding structure defining a plurality of spaced-apart laterally-disposed open areas to form a unitary body of such cellular material having a plurality of spaced-apart individual portions of such cellular material generally conforming in shape and pattern to the shape and pattern of the open areas of the molding member, and (iii) heating such unitary body to cause the cellular material to cure. In conducting this operating, the molding structure may be left in the recurable foamy material as it is being cured or it may be removed from the foamy material at any stage before it is fully cured.

These and other embodiments of this invention will become still further apparent from the ensuing description, appended claims, and accompanying drawings.

Fig. 1 depicts in fragmentary plan view a polyimide foam structure of this invention.

Figs. 2 and 3 illustrate in sectional elevation one method by which structures of this invention may be produced pursuant to this invention.

Fig. 4 illustrates in sectional elevation taken along line 4,4 of Fig. 1 a polyimide foam structure of this invention.

Fig. 5 depicts in fragmentary plan view an alternative form of molding member that may be used in forming the shaped cellular articles of this invention.

Fig. 6 depicts in fragmentary plan view another alternative form of molding member that may be used in forming the shaped cellular articles of this invention.

Fig. 7 depicts in fragmentary plan view yet another alternative form of molding member that may be used in forming the shaped cellular articles of this invention.

Fig. 8 depicts in plan view still another alternative form of molding member that may be used in forming the shaped cellular articles of this invention.

Fig. 9 depicts in sectional elevation a laminated polyimide foam structure of this invention.

In producing this recurable material, a body (e.g., a slab) of cured polyimide foam is converted by a hydrolytic steaming process under controlled temperature-pressure conditions into a body of recurable material which is malleable and pliable and easily cut or shaped. Yet it retains most of its original geometric configuration and cellular structure. Thus while in this non-resilient, non-flexiable easily cut form it can be shaped by means of a cellular molding structure such as a honeycomb or the like. On heating the resultant shaped cellular structure to a suitable temperature the recurable foam returns to a cured resilient state.

The conditions used in the steam treatment are preferably such as to yield a recurable material that on recuring possesses at least tensile properties comparable to those of the original cured foam. However for some applications the recurable foamy material need not have this characteristic -- it may be a material that is recurable to a cured foam having lower tnesile properties than the initial cured foam, as already observed.

Referring now to the Drawings, Figs. 2 and 3 illustrate one preferred way be which the non-flexiable, non-resilient recurable cellular material may be shaped. In this operation a body 10 (e.g., a slab) of recurably cellular material and a molding member 20 such as a honeycomb are aligned with each other and brought together so that structure 20 is impressed into body 10. The precise way in which this is accomplished is not critical and various ways may be used, such as by pressing structure 20 into stationary body 10, or body 10 into stationary structure 20, or by concurrently moving body 10 and structure 20 against each other. In any case structure 20 cuts into the recurable cellular material of body 10 to whatever depth may be desired while leaving at least part of the lower portion of body 10 intact. Thereupon the resultant structure is heated to a curing temperature, for example in an oven. Before, during or after this curing operation, molding member 20 may be withdrawn from body 10. If the shape and materials of construction of the molding member are such that it would become tightly bonded to the cured cellular

material, it is desirable to remove the molding member before or during the early stages of the curing operation. As indicated in Figs. 1 and 4, these operations result in the formation of structures of this invention 40 which the integral body of cured polyimide foam has a plurality of spaced apart laterally-disposed individual molded portions 30 extending from a continuous portion 25 of the cured polyimide foam 25.

Figs. 5, 6, 7 and 8 indicate that the configuration of molding member 20 can vary widely. For example in Fig. 5 the interior walls 15 of molding member 20 define a diamond shaped pattern of cells. In Fig. 6, molding member 20 has a rectangular or square pattern of cells whereas in Fig. 7 a pattern of adjacent offset circular cells is defined by the interior walls 15 of molding member 20. In Fig. 8, molding member 20 consists of a frame 23 across which are stretched a plurality of thin wires 27, 29. In the form depicted, these wires are stretched tightly at right angles to each other thereby forming a series of laterally adjacent rectangular spaces. Wires 27, 29 may be interwoven as in a screen or one set may be superposed one set above the other. Other configurations for the molding members are possible and permissible.

The materials from which the molding member 20 itself may be formed can be widely varied to suit the needs of the occasion. Thus molding member 20 may be composed of metals, polymers and plastics (e.g., polyimide, fluoropolymers such as TEFLON polymer, polybenzimidazole, and polypropylene), resin coated or impregnated paper or cardboard, fiber composites, and the like. The size of the individual cells within the molding member and the thickness of the walls separating such cells can range from large to small -- this is primarily a matter of choice to be governed by such factors as intended use of the resultant product, cost, and availability of materials. It will be appreciated however that the walls of the molding member should not be so thick as to completely crush the cellular material within and below the cells so that the material within and below the cells no longer has any cellular structure whatever.

Fig. 1 depicts one preferred form of the structures of this invention. It will be seen from Fig. 1 that the structure is composed of an integral body referred to generally as 40 comprising a lower continuous portion 25 from which a plurality of laterally disposed individual molded portions 30 extend in an upward direction from portion 25. The entire structure may thus be composed of cured polyimide foam (as depicted in Fig. 1). Alternatively, and, as indicated by Fig. 9, the cured polyimide structure of this invention may be modified by applying one or more laminates 50 to the continuous portion 25 of the structure. Such laminates are preferably applied to the side of the body opposite the spaced apart laterally disposed individual molded portions 30 integral therewith.

It will be apparent that the shape and depth of the individual molded portions 30 may be varied. Thus, in Fig. 1 these portions are hexagonal in shape. Use of the molding members of Figs. 5, 6 and 7 would produce a diamond shaped pattern of individual molded portions, a rectangular pattern of square individual molded portions, and an offset pattern of circular individual molded portions, respectivly. Use of the molding member of Fig. 8 would produce a member of similar character to that resulting from use of molding member of Fig. 6 with the exception that the distance between adjacent individual molded portions would be much smaller that in the case of molding member of Fig. 8. The walls of the molded portions 30 may be stepped, tapered, or vertically ribbed.

When producing a laminated structure of this invention, a wide selection of laminating materials are available for use. Suitable laminating materils include sheets, plies, boards, films, foils or other suitable generally flat forms of metal, plastics, fiber-reinforced composite materials, reinforced ceramic composites, resin-coated fibrous materials, paper or paperboard, particle board, rubbers and elastomers, and many other similar materials. Laminating material 50 may be applied before, during or after the curing operation. Suitable adhesives may be used in order to secure or assist in securing laminating material 50 to the structure. In some cases an adhesive may not be necessary, as when the laminating material 50 is applied tightly against the body of shaped cellular material before curing is effected whereby the cured polyimide serves as an adhesive. However ordinarily it is convenient and desirable to employ an adhesive to insure tight bonding between the parts. The types and identities of adhesives suitable for this use are so well known to those skilled in the art as to require no further explanation. See for example Kirk-Othmer, Encyclopedia of Chemical Technology, Copyright 1978 by John Wiley & Sons, Inc., Wiley-Interscience, Third Edition, Volume 1, pages 488-510 and references cited therein; and Encyclopedia of Polymer Science and Technology, Copyright 1964 by John Wiley & sons, Inc., Interscience, Volume 1, pages 445-550 and references cited therein.

Laminating material 50 may also be in the form of tapes or sheets having adhesive on either or both sides. The composition of the tape or sheet and adhesive will of course be dependent on the use for which the resultant composite article is intended. A wide variety of commercially-available tapes are suitable for making such composite articles. Some of these materials are described, for example, in product brochures such as "Scotch 3M Industrial Tapes and Related Products" (No. 70-0701-06748(151) DPI) and "Scotch 3M

Specialty Tapes and Related Products" (No. 70-0701-5000-1), (both available from the 3M Company) or equivalent brochures, and "temp-r-tape/electrical-mechanical" (No. TRT-4-2/83), or equivalent brochure (available from CHR Industries, Inc.)

It will of course be recognized that multilayered structures or panels may be used as laminating material 50. The possibilities are thus virtually limitless.

Examples VII and VIII illustrate the production and properties of cellular structures of this invention.

## Example VII

A slab 0.87 inch in thickness of cured polyimide foam of the type described in Example I was treated with steam in an autoclave at about 132°C for 3 to 4 hours. A commercially-available honeycomb approximately 0.36 inch in thickness made from paperboard coated with a phenolic resin was impressed into the resultant slab of recurable non-flexible, non-resilient recurable cellular material to a depth of 0.37 inch to fill the cells of the honeycomb therewith. This left the bottom 0.5 inch thickness of the cellular material intact and uncut. The major axis (apex to opposite apex) across the individual honeycomb cells was about 0.15 inch and the minor axis (sidewall to opposite sidewall) was about 0.10 inch. The resultant article with the honeycomb in place was heated in a thermal oven at about 274°C for about one hour to recure the foam into polyimide foam. After cooling to room temperature the honeycomb was removed leaving an integral body of cured polyimide foam having a plurality of spaced-apart laterally-proximate individual portions of cured polyimide foam approximately 0.37 inch in length integral with and extending from said base portion. The finished article had a density of 0.56 pounds per cubic foot and an areal density of 0.47 pound per square foot. It exhibited considerable flexibility and resiliency. For example, it could be bent repeatedly 90° around a right angle corner of a wall. It was flame resistant.

## Example VIII

Using the same general procedure as in Example VII, a similar article was produced form a 1.5 inch thick slab of the same kind of cured polyimide foam and a 1.0 inch thick a phenolic resin coated paperboard honeycomb (major axis: ca. 0.23 inch; minor axis: ca 0.2 inch). In this case the honeycomb was impressed in the steam-treated slab to a depth of one inch leaving the lower 0.5 inch portion of the slab intact and uncut. After curing and removal of the honeycomb, the unitary article of this invnetion had a density of 0.49 pound per square foot and an areal density of 0.41 pound per square foot. It had a plurality of individual hexagonally shaped projections of polyimide foam one inch long extending from a one-half inch base of polyimide foam integral therewith. The article was flexible, resilient and flame resistant.

Laminates of this invention suitable for use as sound and vibration damping self-adhesive panels can be formed by applying to the underside of a cured, shaped polyimide foam article (such as those of Examples VII and VIII) a tape or sheet coated with adhesive on both sides (e.g., a Kapton® polyimide tape having a silicone adhesive on both sides available from CHR Industries as temp-r-tape® product number K-100). Alternatively the panels, whether laminated or unlaminated, may be installed by conventional fasteners such as nails, screws, or the like. Such panels have thermal insulative and flame resistant properties as well.

The flame and fire resistance of the foams of the cured cellular structures of this invention together with their relatively low smoke output when exposed to fire render them ideally suited for use as decorative construction and/or insultation materials for aircraft and spacecraft, houses and buildings of all types, automobiles and trucks, boats and ships, submarines, and the like. The laminated structures are particularly useful as wall and ceiling panel structural members especially when the laminate(s) used have an exterior adhesive surface and are themselves composed of flame resistant or non-combustible material(s). Such articles can readily be applied to wall and ceiling surfaces, as flame resistant and serve to dampen sound and other types of vibration. Enhancing all such utilities are the relatively low densities and high strengths in which the structures of this invention may be provided.

In the provision of polyimide foam-filled honeycomb-type structures, this invention provides a new type of composite based on polyimide foam which possesses enhanced strength, yet is lightweight and flame resistant, and thus is useful for structural, vibration damping and thermal insulation applications These composites make effective use of the strength and lightweight characteristics of open-celled structural materials, such as honeycomb, and the combination of desirable properties of cured polyimide foams, such

as low density, flame resistance, sound and vibration damping characteristics, thermal insulative qualities, and desirable low temperature properties. In order to produce such composites it was necessary to discover a way of insuring that all cells of the honeycomb or cellular structure receive a suitable quantity of polyimide foam and of insuring that the foam will be well-bonded to the adjacent cell walls of the cellular structure.

This invention thus involves, inter alia, the discovery of a novel method for filling the cells of cellular structures with polyimide foam. The method makes it possible produce the filled structures without applying the precursor by dipping or spraying and foaming the material in situ followed by trimming or by crushing preformed foam into the cells. By virtue of this invention new and highly useful lightweight, flame resistant composite structures can be readily produced, and such composite structures and their production constitute additional embodiments of this invention.

As described above, it has been discovered that by exposing cured polyimide foam to an atmosphere of steam under appropriate time-temperature-pressure conditions a non-flexible, non-resilient recurable cellular material is formed.

In accordance with an aspect of this invention such preformed foamy material curable to a polyimide foam is introduced into the open cells of the honeycomb or like cellular structure and cured therein by the application of thermal energy.

Thus, in conducting the cell-filling operation, a preformed body of cured polyimide foam is used. This body is first converted into a body of non-flexible, non-resilient recurable cellular material in which the cellular structure of the initial foam remains substantially intact. When in this form, the cellular material is easily forced into the cells of a cellular structure for example by pressing the honeycomb or like cellular structure into the cellular material, or vice versa. The resultant filled structure is then heated to effect curing of the cellular material within the cells of the honeycomb or the like. When producing laminates or sandwich composites, this heating step may be conducted before, during or after the application of the laminating materials used in covering one or both ends of the filled cells of the core or substrate of the laminated or sandwich composite sheet or panel.

Accordingly, in one of its embodiments this invention provides a process which comprises converting cured polyimide foam into a non-flexible, non-resilient recurable cellular material by exposing the foam to the action of pressurized steam, impressing into the cellular material a structure having a plurality of laterally disposed open cells therein to at least partially fill such open cells with the non-flexible, non-resilient recurable cellular material, and heating the structure and contained cellular material to cause such material to cure.

In another of its embodiments this invention provides a process which comprises (i) introducing a non-flexible, non-resilient recurable cellular material, prepared by exposing cured polyimide foam to an atmosphere of steam at an elevated pressure, into a structure having a plurality of walls defining a plurality of laterally disposed open cells so that such open cells are at least partially filled with such recurable cellular material, and (ii) curing the cellular material while contained within such cells to form a composite polyimide foam-containing structure. A preferred process of this type comprises (i) impressing into a non-flexible, non-resilient recurable impressible cellular material, prepared by exposing cured polyimide foam to an atmosphere of steam at an elevated pressure, a structure having a plurality of walls defining a plurality of laterally disposed open cells so that such open cells are at least partially filled with such recurable cellular material, and (ii) heating the recurable cellular material to cause it to cure while contained within such cells to form a composite polyimide foam-containing structure.

The cellular structures used in these operations are preferably honeycomb structures because of their strength characteristics and commercial availability, although a variety of other types of cellular structures can be employed.

Still other embodiments of this invention include:

(a) A composite article comprising a structure having a plurality of laterally disposed interconnected walls defining a plurality of open-ended cells therein (e.g., a honeycomb), said cells being at least partially filled with cured polyimide foam.

(b) A composite article comprising (i) a structure having a plurality of laterally disposed interconnected walls defining a plurality of open-ended cells therein, (ii) cured polyimide foam disposed within said cells and bonded to the walls thereof, and (iii) a laminate affixed to at least one end of the interconnected walls and covering the proximate ends of the foam-containing cells.

(c) A composite article comprising (i) a structure having a plurality of laterally disposed interconnected walls defining a plurality of open-ended cells therein, (ii) cured polyimide foam disposed within said cells and bonded to the walls thereof, (iii) a laminate affixed to one end of the interconnected walls and covering the proximate ends of the foam-containing cells, and (iv) a laminate affixed to the other end of the

interconnected walls and covering the proximate ends of the foam-containing cells.

These and other embodiments of this invention will become still further apparent from the ensuing description, appended claims, and accompanying drawings.

Fig. 10 depicts in fragmentary plan view a foam-filled honeycomb structure of this invention.

Fig. 11 illustrates in sectional elevation a method by which foam-filled cellular structures of this invention may be produced pursuant to this invention.

Fig. 12 illustrates in sectional elevation taken along line 3,3 of Fig. 10 but on a smaller scale, a foam-filled cellular structure of this invention.

Fig. 13 illustrates in sectional elevation a foam-filled cellular structure of this invention laminated on both sides (i.e., on both ends of the laterally disposed cells of the cellular structure).

Fig. 14 depicts in fragmentary plan view an alternative form of cellular structure that may be used in forming the foam-filled articles of this invention.

Fig. 15 depicts in fragmentary plan view another alternative form of cellular structure that may be used in forming the foam-filled articles of this invention.

Fig. 16 depicts in fragmentary plan view yet another alternative form of cellular structure that may be used in forming the foam-filled articles of this invention.

In producing this recurable material, a cured polyimide foam is converted by a hydrolytic steaming process under controlled temperature-pressure conditions into a recurable material which is malleable and pliable and easily cut or shaped. Yet it retains most of its original geometric configuration and cellular structure. It is introduced into the cells of a cellular structure such as a honeycomb, while in its malleable, pliable, easily cut form. On heating the resultant foam-filled cellular structure to a suitable temperature the recurable foam returns to a cured state within the honeycomb or like cellular structure.

The conditions used in the steam treatment are preferably such as to yield a recurable material that on recuring possesses at least tensile properties comparable to those of the original cured foam. However for some applications the recurable foamy material need not have this characteristic -- it may be a material that is recurable to a cured foam having lower tensile properties than the initial cured foam, as already observed.

Referring now to the Drawings, Fig. 11 illustrates one preferred way by which the non-flexible, non-resilient recurable cellular material may be introduced into the cells of a honeycomb or other cellular structure. In this operation a body 10 (e.g., a slab) of recurable cellular material and an open cellular structure 20 such as a honeycomb are aligned with each other and brought together so that structure 20 is impressed into body 10. The precise way in which this is accomplished is not critical and various ways may be used, such as by pressing structure 20 into stationary body 10, or body 10 into stationary structure 20, or by concurrently moving body 10 and structure 20 against each other. In any case the cells of structure 20 become filled with the recurable cellular material of body 10 to whatever depth may be desired. Thereupon the resultant foam-filled structure is heated to a curing temperature, for example in an oven. As indicated in Figs. 10 and 12, this results in the formation in the cells of structure 20 of a plurality of plugs 30 of cured polyimide adhering to the adjacent walls 25 of the structure.

Figs. 14, 15 and 16 indicate that the configuration of cell arrangement of structure 20 can vary widely. For example in Fig. 14 the interior walls of structure 20 define a diamond shaped pattern of cells. In Fig. 15, structure 20 has a rectangular or square pattern of cells whereas in Fig. 16 a pattern of adjacent offset circular cells is defined by the interior walls of structure 20. Other configurations for the cells are possible and permissible.

The materials from which the cellular structure 20 itself may be formed can be widely varied to suit the needs of the occasion. Thus structure 20 may be composed of metals, polymers and plastics (e.g., polyimide, fluoropolymers such as TEFLON polymer, polybenzimidazole, and polypropylene), resin coated or impregnated paper or cardboard, fiber composites, and the like. The size of the individual cells can range from large to small -- this is primarily a matter of choice to be governed by such factors as intended use of the resultant product, cost, and availability of materials.

While it is preferable to introduce the non-flexible, non-resilient recurable cellular material into the cellular structure by procedures such as described above, other methods may be used. For example the recurable pasty foamy material may be introduced into the cells of the cellular structure by means of a spatula, or other suitable extrusion device, or the like if care is exercised not to excessively destroy the structure of the recurable foam.

As indicated by Fig. 13, a foam-filled laminated structure 40 may be formed by applying a suitable laminating material 50 over the ends of the foam-filled structure 20 to cover some if not all of the filled cells. Laminating material 50 may be applied to both sides of foam-filled structure 20 (as indicated in Fig. 13) or it may be applied to just one side, if desired.

A wide selection of laminating materials are available for such use, and include sheets, plies, boards, films, foils or other suitable generally flat forms of metal, plastics, fiber- reinforced composite materials, reinforced ceramic composites, resin-coated fibrous materials, paper or paperboard, particle board, rubbers and elastomers, and many other similar materials. Laminating material 50 may be applied before, during or after the curing operation. Suitable adhesives may be used in order to secure or assist in securing laminating material 50 to the ends of the foam-filled cells of structure 20. In some cases an adhesive may not be necessary, as when the laminating material 50 is applied tightly against the ends of plugs 30 before curing is effected whereby the cured polyimide serves as an adhesive. However ordinarily it is convenient and desirable to employ an adhesive to insure tight bonding between the parts. The types and identities of adhesives suitable for this use are so well known to those skilled in the art as to require no further explanation. See for example Kirk-Othmer, Encyclopedia of Chemical Technology, Copyright 1978 by John Wiley & Sons, Inc., Wiley-Interscience, Third Edition, Volume 1, pages 488-510 and references cited therein; and Encyclopedia of Polymer Science and Technology, Copyright 1964 by John Wiley & Sons, Inc., Interscience, Volume 1, pages 445-550 and references cited therein.

Laminating material 50 may also be in the form of tapes having adhesive on either or both sides. The composition of the tape and adhesive will of course be dependent on the use for which the resultant foam-filled composite article is intended, and a wide variety of commercially-available tapes are suitable for making such composite articles. Some of these materials are described, for example, in product brochures such as "Scotch 3M Industrial Tapes and Related Products" (No. 70-0701-06748(151) DPI) and "Scotch 3M Specialty Tapes and Related Products" (No. 70-0701-5000-1), (both available from the 3M Company) or equivalent brochures, and "temp-r-tape/electrical-mechanical" (No. TRT-4-2/83), or equivalent brochure (available from CHR Industries, Inc.).

It will of course be recognized that multilayered structures or panels may be used as laminating material 50. The possibilities are thus virtually limitless.

Examples IX and X illustrate the production and properties of laminated foam-filled cellular structures of this invention.

## Example IX

A slab of cured polyimide foam of the type described in Example I was treated with steam in an autoclave at about 132 °C for 4 hours. A commercially-available honeycomb approximately 0.36 inch in thickness made from paperboard coated with a phenolic resin was impressed into the resultant slab of recurable non-flexible, non-resilient recurable cellular material to fill the cells of the honeycomb therewith. The major axis (apex to opposite apex) across the individual honeycomb cells was about 0.15 inch and the minor axis (sidewall to opposite sidewall) was about 0.10 inch. The foam-filled structure was heated in a thermal oven for 40 to 45 minutes at about 274 °C to recure the foam into polyimide foam within the cells of the honeycomb. The resultant structure was then laminated on both sides (over the ends of the filled cells) with a polyimide tape having a silicone adhesive (CHR Product No. K105, of CHR Industries, Inc., New Haven, CT). The finished composite had a density of 9.62 pounds per cubic foot and an areal density of 0.32 pound per square foot. It exhibited a burn-through time through its 0.37 inch thickness of 44 seconds when exposed to a propane torch with a flame temperature of 1960 °F (about 1071 °C).

## Example X

Using the same general procedure as in Example IX, a composite laminated on one side only was produced from a phenolic resin coated paperboard honeycomb (thickness: 1 inch; major axis: ca. 0.23 inch; minor axis: ca. 0.2 inch). The laminate was formed from a glass cloth tape, 7 mils in total thickness (Scotch brand industrial tape No. 361, of 3M Company). The cured flame-resistant laminate had a density of 4.2 pounds per cubic foot and an areal density of 0.35 pound per square foot.

Examples XI and XII illustrate the formation of foam-filled cellular structures of this invention, which may be used as is or subsequently laminated on either or both sides.

## Example XI

Two slabs of a cured polyimide foam composed predominantly of polyimide made from benzophenone tetracarboxylic acid dimethyl ester reacted with an essentially equimolar amount of a mixture of 4,4′-methylenedianiline, 2,6-diaminopyridine and a small proportion of primary amino-terminated butadiene-acrylo-nitrile copolymer (see U. S. 4,539,342) were steam treated in an autoclave for 5 hours. The changes in Tg of the two slabs before and after this treatment were: Slab A, 270 °C to 264 °C; Slab B, 273 °C to 265 °C. The so-treated foams were non-flexible and non-resilient in character. Each of these slabs was pressed into a resin coated paperboard honeycomb and the resultant filled honeycomb structures subjected to curing at 260 °C for one hour. The recured polyimide filled honeycombs exhibited excellent integrity -- the polyimide foam was well-bonded to the interior honeycomb structure and all cells were substantially filled with the polyimide foam. After such curing the Tg of the polyimide foam in the composite articles was: Foam in article from Slab A: 278 °C; Foam in article from Slab B: 283 °C.

## Example XII

A slab of cured polyimide foam made by reaction between substantially equimolar amounts of benzophenone tetracarboxylic acid dimethyl ester and a mixture composed of 50 mol percent of 4,4′-methylenedianiline, 30 mol percent 2,6-diaminopyridine and 20 mol percent of 1,6-diaminohexane was treated with steam in an autoclave for 2.15 hours. At the end of this time, the foam was non-resilient, non-flexible, deformable and readily penetratable. While in this condition, it was used to fill a resin-coated paperboard honeycomb and the resultant composite was subjected to thermal curing for two hours at 260 °C. At the end of this time the foam filled composite was cooled to room temperature. It was found that the foam tightly adhered to the honeycomb structure and that the cells thereof were substantially completely filled with a uniform polyimide foam.

The flame and fire resistance of the foams of the foam- filled cellular structures of this invention together with their relatively low smoke output when exposed to fire render the foam-filled structures ideally suited for use as construction and/or insulation materials for aircraft and spacecraft, houses and buildings of all types, automobiles and trucks, boats and ships, submarines, furniture, and the like. The foam-filled laminated and sandwich structures are particularly useful as structural members (e.g., flooring, wall panels, etc.) especially when the honeycomb or other cellular structure and the laminate(s) used are themselves composed of flame resistant or non-combustible material(s). Enhancing all such utilities are the relatively low densities and high strengths in which the foam-filled structures of this invention may be provided. The cured foams within the cellular structures also serve to dampen sound and other types of vibration.

The initial cured polyimide foams used in the practice of this invention can vary widely in composition and can be specification or off-specification grade materials. In general, they are produced from polyimide precursors composed of a mixture comprising at least (i) one or more organic tetracarboxylic acids or derivatives thereof, and (ii) one or more organic diamines co-reactive therewith, preferably including at least an aromatic or heterocyclic primary diamine. Components (i) and (ii) are usually present in the mixture in essentially stoichiometric quantities.

The organic tetracarboxylic acids or derivatives thereof are preferably based on aromatic tetracarboxylic acids having the general formula:

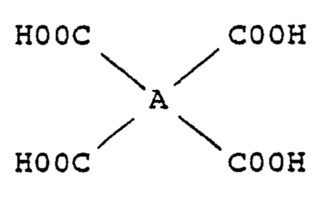

wherein A is a tetravalent organic group preferably an aromatic group. The tetravalent organic group A is most preferably an aromatic group having one of the following structures:

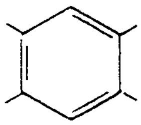

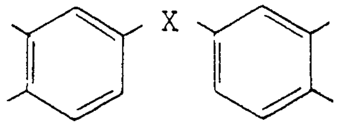

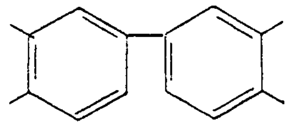

wherein X is one or more of the following:

$-\underset{\underset{O}{\|}}{C}-$;

-O-; -S; $-SO_2-$; $-CH_2$; $-CH_2CH_2-$;

$$-\underset{\underset{CF_3}{|}}{\overset{\overset{CF_3}{|}}{C}}-$$

although other aromatic groups are suitable. The derivatives which may be employed include acid halides, acid salts, esters, and the like. Of these, esters are preferred and are most generally used for foam production.

The derivatives which may be employed include acid halides, acid salts, esters, and the like. Of these, esters are preferred and are most generally used for foam production.

Preferred among the tetracarboxylic acid esters are the alkyl esters of 3,3′,4,4′-benzophenone tetracarboxylic acid, most preferably the lower alkyl diesters thereof. Mixtures of two or more aromatic esters, most preferably predominating in diesters, may be employed, if desired.

It is also possible, in accordance with this invention, that the tetracarboxylic acid derivative employed in the manufacture of the polyimide foams be a caprolactam as taught by U. S. 4,161,477, 4,183,838 and 4,183,839. As described in those patents, bis-imide is formed by reaction of a tetracarboxylic acid dianhydride with an oxoimine such as caprolactam and then reacted with the diamine or diamines to produce the desired polyimides. The caprolactam is displaced during the reaction, in much the same way as is the ester portion of the tetracarboxylic acid ester.

The tetracarboxylic acid derivative used in the manufacture of the initial polyimide foams employed in the practice of this invention may also be an N-substituted imido acid ester of the tetracarboxylic acid as taught by U. S. 4,647,597 and 4,656,198. As described in those patents, the N-substituted imido acid ester may be formed by reacting an aromatic tetracarboxylic acid dianhydride with an amino acid and an alcohol or mixture of alcohols. As further taught in those patents, on reaction of the imido acid ester with the diamine or diamines, the acid ester group bonded to the nitrogen atom of the N-substituted imido acid ester is displaced so that the desired polyimide is formed.

The organic diamines with which the foregoing mixture of tetracarboxylic acids or derivatives is employed may be represented by the formula:

$H_2N-R'-NH_2$

wherein R, is an aromatic group containing 5 to 16 carbon atoms and containing up to one hetero atom in the ring, the hetero atom being nitrogen, oxygen or sulfur. Also included are aromatic groups such as:

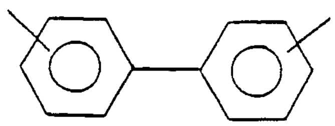

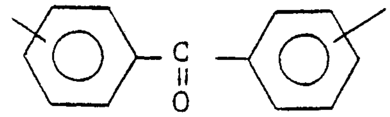

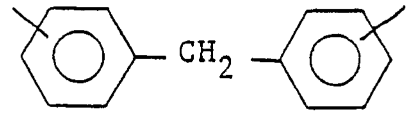

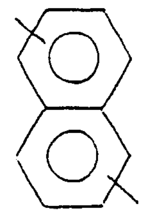

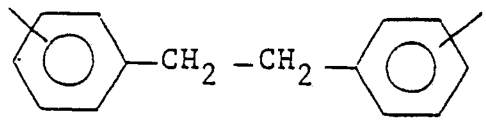

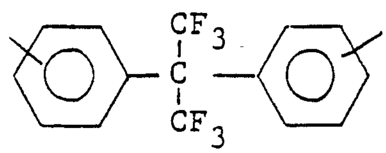

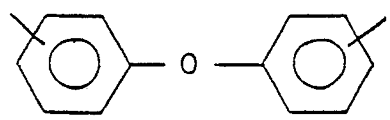

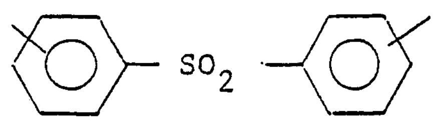

Representatives of such diamines include:
2,6-diaminopyridine;
3,5-diaminopyridine;
3,3′-diaminodiphenylsulfone;
4,4′-diaminodiphenylsulfone;
4,4′-diaminodiphenylsulfide;
3,3′-diaminodiphenylether;
4,4′-diaminodiphenylether;
meta-phenylenediamine;
para-phenylenediamine;
4,4′-methylene dianiline;
2,6-diamino toluene;
2,4-diamino toluene;
and the like.

It is also possible and sometimes desirable in the preparation of the polyimide precursors, to include in the reaction mixture one or more aliphatic diamines. Such aliphatic diamines are preferably alpha-omega diaminoalkanes having the formula:

$H_2N-(CH_2)_n-NH_2$ (I)

wherein n is an integer from 2 to 16. Representatives of such diamines include 1,3-diaminopropane, 1,4-diaminobutane, 1,5-diaminopentane, 1,6-diaminohexane, etc.

In place of or in addition to the foregoing aliphatic amines, use can be made of aliphatic etherified polyamines of the type polyoxypropylene amines having the formula:

$H_2N-CH(CH_3)CH_2-[OCH_2CH(CH_3)]_x-NH_2$ (II)

wherein x varies from 1 to about 5 carbon atoms.

Other useful primary diamines which may be included in the foams used in the practice of this invention include amino-terminated butadiene-nitrile copolymers having the general formula:

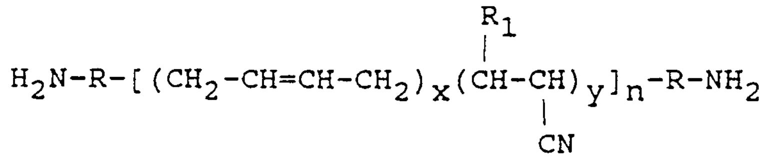

(III)

wherein R is either a phenylene group or an alkylene group, $R_1$ is hydrogen or methyl, and x and y or each independently integers ranging from 1 to 25 and n is an integer, preferably below 20. In these copolymers it is preferred that butadiene constitute at least 50% by weight of the butadiene and nitrile monomer. The nitrile monomer copolymerized with the butadiene can either be acrylonitrile or methacrylonitrile. Such copolymers generally have low molecular weights, preferably less than 3,000 to insure that they are sufficiently fluid to react in the formation of the polyimide as well as sufficiently fluid so as to be capable of foaming.

Still another type of primary diamines which may be included in the polyimide foams used in this invention is the aromatic amino-terminated silicones, such as those having the general formula:

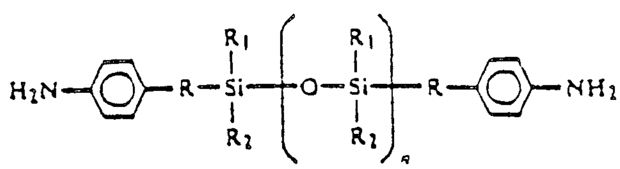

(IV)

wherein R is a $C_2$ to $C_6$ alkylene group, $R_1$ and $R_2$ are each independently lower alkyl containing 1 to 3 carbon atoms and n is an integer from 1 to 4.

Another preferred category of diamines which may be utilized in forming the foams for use in this invention are the diesters of an amino-substituted aromatic carboxylic acid and a polymethylene glycol. Such diesters may be represented by the general formula:

$H_2N\text{-}ArCOO\text{-}R\text{-}OOCAr\text{-}NH_2$ (V)

wherein R is an alkylene group (which may be branched or straight chain) and which preferably contains from 3 to 8 carbon atoms, most preferably trimethylene; and Ar is an aromatic group which may be composed of one or more fused or non-fused benzene rings which in turn may carry suitable substituents (e.g., nitro or alkoxy) in addition to the primary amino groups.

A few exemplary diesters of this type include:

ethylene glycol-4-aminobenzoic acid diester;
ethylene glycol-3-aminobenzoic acid diester;
ethylene glycol-2-aminobenzoic acid diester;
trimethylene glycol-3-aminobenzoic acid diester;
trimethylene glycol-2-aminobenzoic acid diester;
trimethylene glycol-3-amino-2-nitrobenzoic acid diester;
tetramethylene glycol-3-amino-4-nitrobenzoic acid diester;
tetramethylene glycol-3-amino-5-nitrobenzoic acid diester;
tetramethylene glycol-4-amino-2-nitrobenzoic acid diester;
1,5-pentanediol-4-amino-3-nitrobenzoic acid diester;
1,6-hexanediol-5-amino-2-nitrobenzoic acid diester;
neopentyl glycol-4-amino-2-methylbenzoic acid diester;
1,8-octanediol-4-amino-2-propylbenzoic acid diester;
1,9-nonanediol-3-amino-4-methylbenzoic acid diester;
1,10-decanediol-4-(4-aminophenyl)benzoic acid diester;

and the like. Mixtures of such diesters may be employed.

A particularly preferred diester of this type is the diester of trimethylene glycol (1,3-propanediol) and 4-aminobenzoic acid.

In producing the initial polyimide foams, the organic tetracarboxylic acid preferably in the form of its

diester, most preferably from methanol or ethanol, is reacted with the above-referred-to amine(s) to form a prepolymer in the form of a consolidated, fragile foam structure, which is then subjected to additional heating in order to effect imide formation and thereby cure the polymer. When using the tetracarboxylic acid ester this operation can be conducted either in the presence or absence of an added blowing agent to provide the desired polyimide foam.

The relative proportions used in the preparation of the polyimide and polymers can be varied. In general, it is preferred to employ essentially stoichiometric proportions as between the mixture of tetracarboxylic acids or derivatives thereof and the primary diamine(s). However, non-stoichiometric mixtures can be used although the excess of the reactant present in excess usually does not participate in the reaction.

When using a lower alkyl ester of the tetracarboxylic acid, the resulting alcohol produced in the reaction as well as the water released during the reaction can be used as the blowing agent during polymerization to form the desired polyimide foams. Alternatively, use can be made of any of a variety of organic or inorganic blowing agents. By use of a solid blowing agent such as Celogen TSH, Celogen OT, Celogen AZ 130, Celogen RA, Celogen HT 500, Celogen HT 550, sodium bicarbonate, benzenesulfonyl hydrazide, boric acid, benzoic acid, and Expandex 5 PT of controlled particle size, the homogeneity of the cellular structure of the resulting polyimide foam can be more accurately controlled. Preferred for such use are solid blowing agents which have been subjected to ball milling or other grinding so that the blowing agent is less than 200 microns in diameter, with 98 percent of the blowing agent particle sizes being less than 150 microns in diameter.

The chemical compositions of the blowing agents identified by trade name above follow:

| Blowing Agent | Chemical Composition |
|---|---|
| Celogen TSH | toluenesulfonyl hydrazide |
| Celogen OT | p,p′-oxybis(benzenesulfonyl hydrazide) |
| Celogen AZ 130 | azodicarbonamide |
| Celogen RA | p-toluenesulfonyl semicarbazide |
| Celogen HT 500 | a modified hydrazine derivative |
| Celogen HT 550 | hydrazol dicarboxylate |
| Expandex 5 PT | 5-phenyltetrazole |

Variations in the concentration of the blowing agent can be used to achieve specific densities and ILD values. Concentrations of up to 10 percent based on the weight of the polyimide precursor, and preferably 1 to 5 percent, can be employed. A concentration of about 2.5 weight percent is particularly preferred.

Hydrated organic compounds of the type referred to in U. S. 4,621,015 may also be used as blowing agents in forming polyimide foams suitable for use in the practice of this invention.

The initial foams may contain various filler and/or reinforcing materials. For example, graphite, glass and other synthetic fibers can be added to the precursor composition to produce a fiber-reinforced product. Microballons may be added for density adjustment, if desired. It is frequently desirable to employ a surfactant thereby increasing cellular structure stability and uniformity, and increase fatigue resistance and make the foam more flexible and resilient. The nature of such surfactants for this use is well known and reported in the patent literature.

When producing foams from tetracarboxylic acids or derivatives thereof other than lower alkyl esters, a blowing agent and/or microballons should be employed in order to achieve a suitable cellular structure.

When producing foams from tetracarboxylic acids or derivatives thereof other than lower alkyl esters, a blowing agent and/or microballons should be employed in order to achieve a suitable cellular structure.

Although not necessary, for some applications it is desirable that the initial foam contain a suitable quantity of a flame retardant material in order to still further increase the flame resistance of the foam.

In preparing the polyimide precursors, it is preferred to employ the procedures and spray drying techniques described in U. S. 4,296,208, the disclosure of which is incorporated herein by reference.

The temperatures at which the precursor is converted to the polyimide foam are generally those temperatures used in the preparation of other polyimide polymers. As a general rule temperatures ranging from 200 to 400 °C can be used, with heating times from 5 to 60 minutes or longer. As those skilled in the art will appreciate, the time for carrying out the reaction is somewhat dependent upon the reaction temperature, higher temperatures enabling the use of shorter reaction times. It is also possible to heat to a lower temperature in the first stage of the reaction and then to higher temperatures in the later stages.

Heating can be carried out in a conventional oven if desired. Alternatively, the foaming and curing of the precursor into a foamed polyimide polymer can be effected by means of microwave heating. In this technique, the precursor is exposed for 1 to 120 minutes to radio frequencies within the range of 915 to 2450 mHz, with the power output ranging from 1 to 100 kw. The power output to prepolymer weight ratio generally falls within the range of 0.1 to 10 kw per kg.

The specific details concerning the production of polyimide foams have been extensively described in the literature and foams suitable for use in the practice of this invention are available as articles of commerce (SOLIMIDE® Foam). In practicing this invention, all that is required is that the initial cured polyimide foam be convertible to a non-flexible, non-resilient recurable cellular material when subjected to steam treatment under appropriate conditions of time, temperature and pressure.

## Claims

1. A process which comprises exposing cured polyimide foam to an atmosphere of steam at elevated temperature and pressure for a period of time sufficient to convert said foam into a non-flexible, non-resilient recurable cellular material, and subsequently recuring such cellular material.

2. A process which comprises compressing and heat curing a non-resilient, non-flexible recurable material formed by subjecting cured polyimide foam to the action of pressurized steam.

3. A process which comprises compressing and heat curing the coating or lamination on a coated or laminated substrate wherein the coating or lamination is a non-resilient, non-flexible recurable material formed by subjecting cured polyimide foam to the action of pressurized steam.

4. A process which comprises compressing and heat curing while interposed between a plurality of substrates a non-resil- ient, non-flexible recurable material formed by subjecting cured polyimide foam to the action of pressurized steam.

5. A process which comprises (i) converting cured polyimide foam into a body of non-flexible, non-resilient recurable cellular material by exposing a body of the foam to the action of steam, (ii) forming in the body of cellular material a plurality of spaced-apart laterally-disposed individual molded portions integral with and extending from a continuous portion of such cellular material, and (iii) heating the resultant unitary body to cause the cellular material to cure.

6. A process which comprises (i) introducing a non-flexible, non-resilient recurable cellular material, prepared by exposing cured polyimide foam to an atmosphere of steam at an elevated pressure, into a structure having a plurality of walls defining a plurality of laterally disposed open cells so that such open cells are at least partially filled with such recurable cellular material, and (ii) curing the cellular material while contained within such cells to form a composite polyimide foam-containing structure.

7. A product prepared by the process of any of claims 1-6.

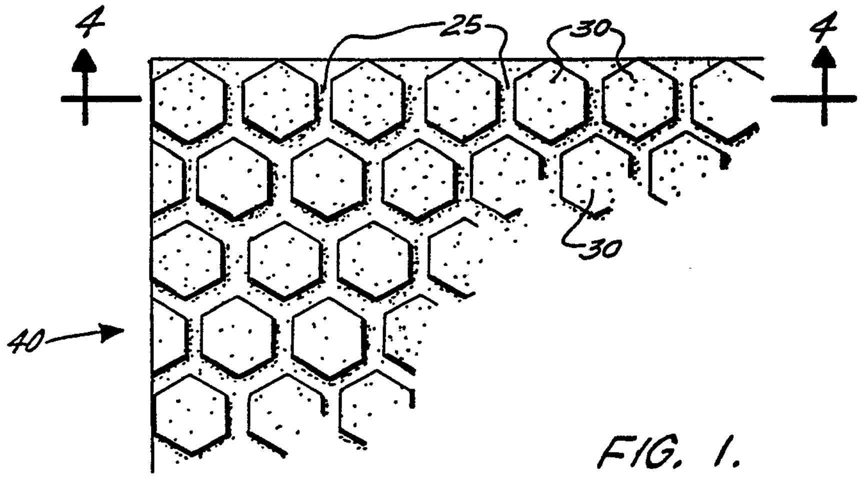


FIG. 1.

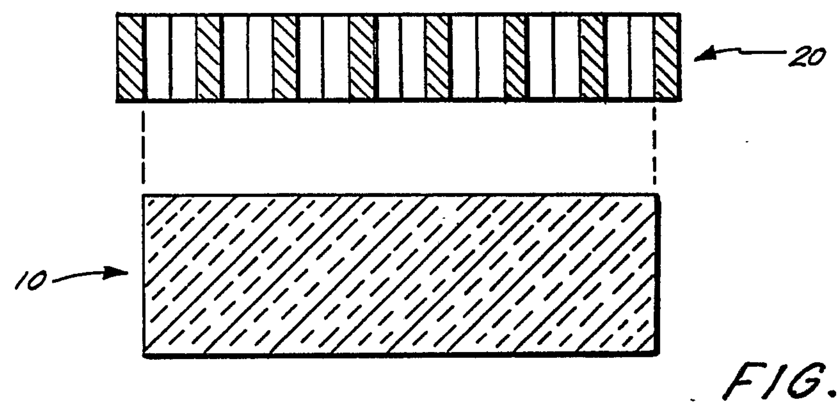


FIG. 2.

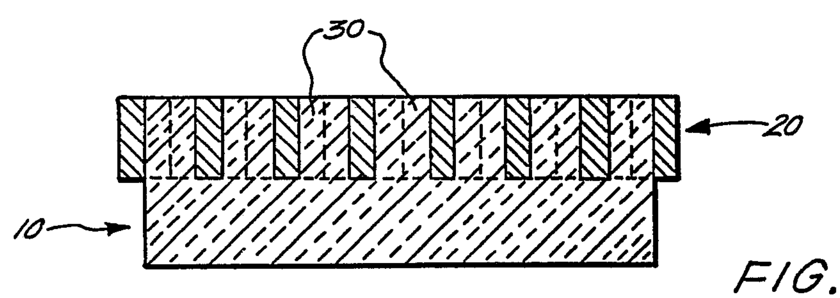


FIG. 3.

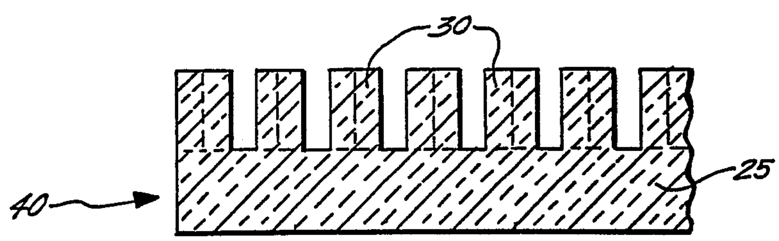


FIG. 4.

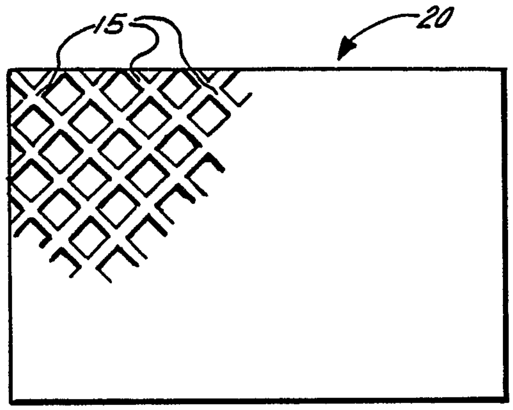


FIG. 5.

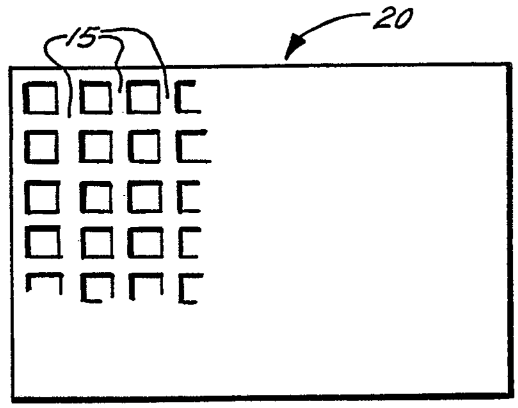


FIG. 6.

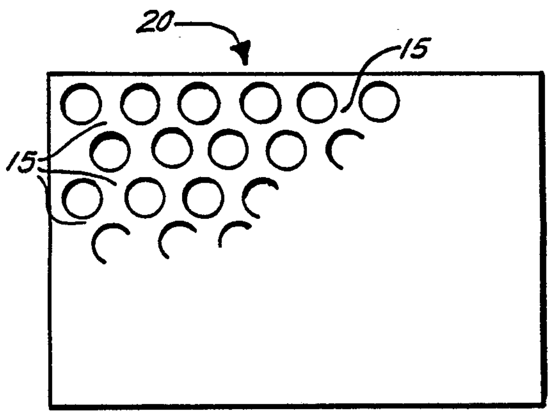


FIG. 7.

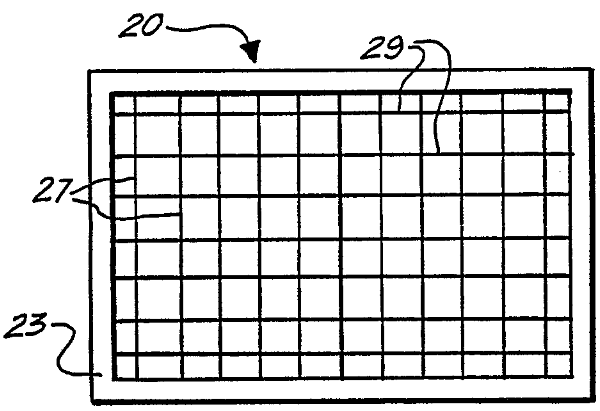


FIG. 8.

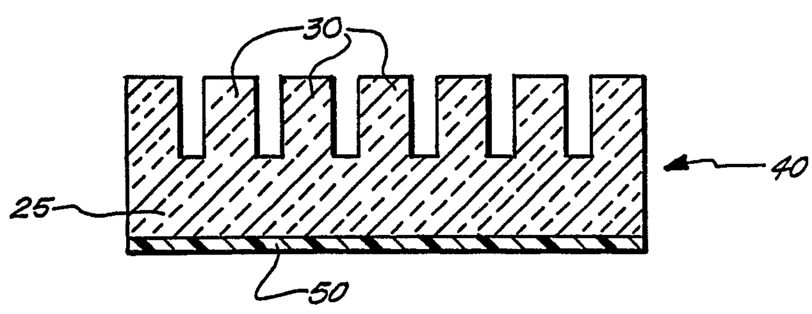


FIG. 9.

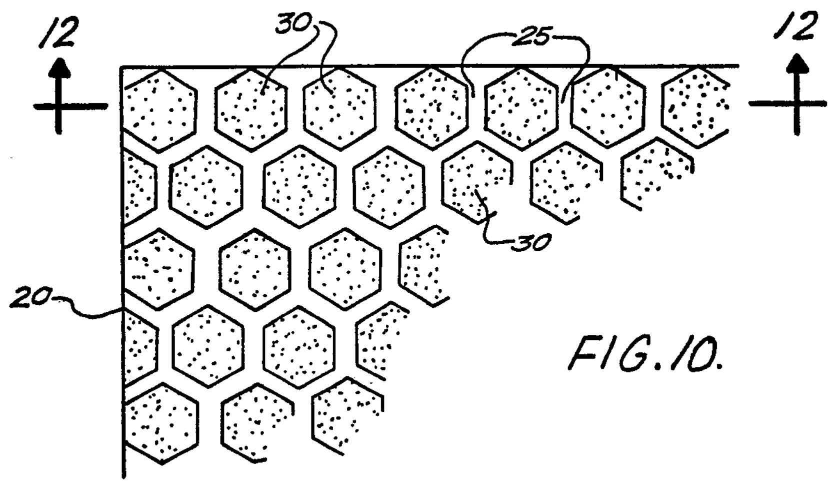


FIG. 10.

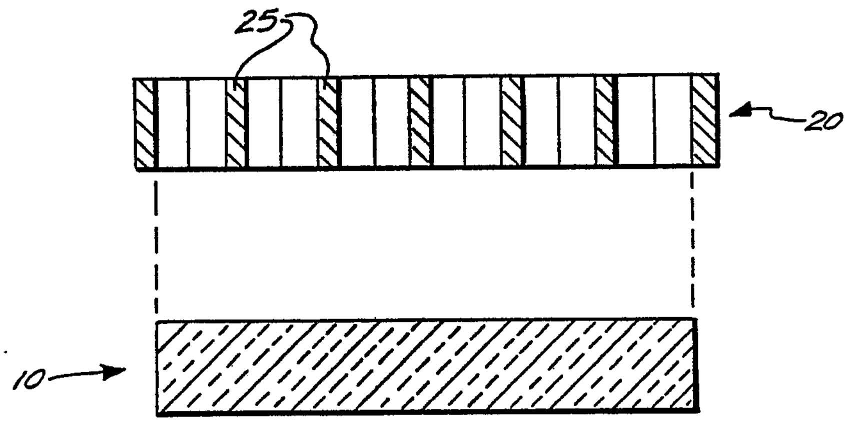


FIG. 11.

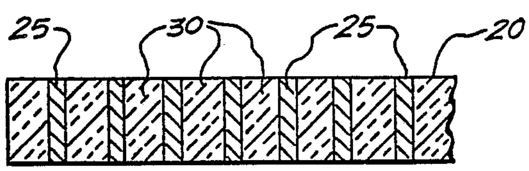


FIG. 12

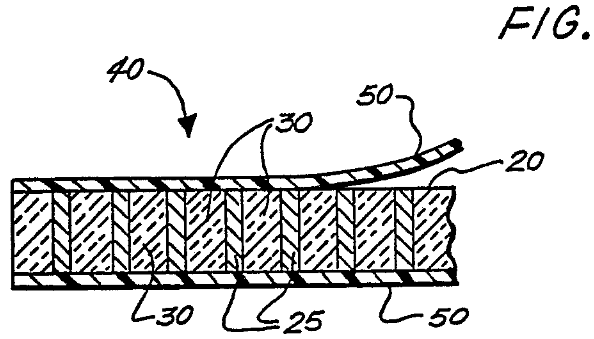


FIG. 13

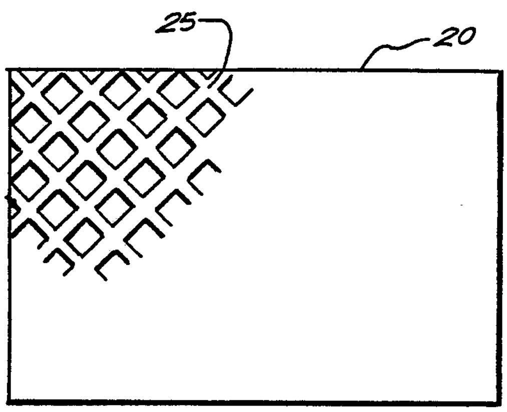


FIG. 14.

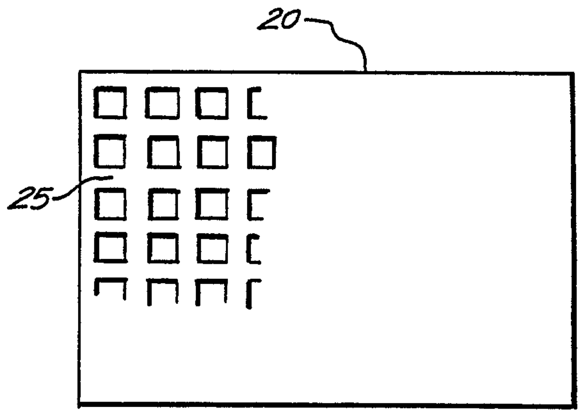


FIG. 15.

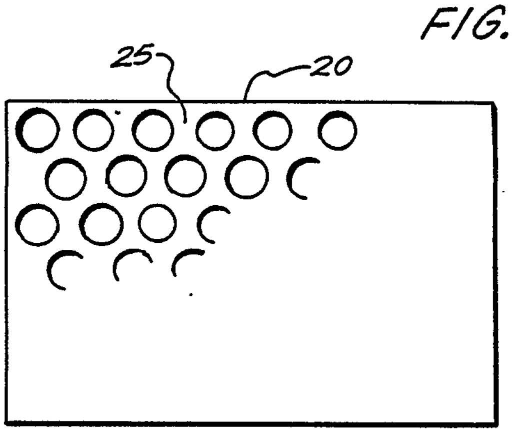


FIG. 16.